# EUROPÄISCHE PATENTSCHRIFT

(11) **EP 2 147 219 B1**
(45) Veröffentlichungstag und Bekanntmachung des Hinweises auf die Patenterteilung: **12.08.2015**
(21) Anmeldenummer: 08735190.4
(22) Anmeldetag: 11.04.2008
(51) Int. Cl.: F15B 15/26

(54) **BLOCKIERVORRICHTUNG MIT FELDSTEUERBARER FLÜSSIGKEIT**
BLOCKING DEVICE HAVING A FIELD-CONTROLLABLE FLUID
DISPOSITIF DE BLOCAGE AVEC LIQUIDE À CHAMP RÉGLABLE

(30) Priorität: 13.04.2007 DE 102007017588
(43) Veröffentlichungstag der Anmeldung: 27.01.2010
(73) Patentinhaber: Fraunhofer-Gesellschaft zur Förderung der angewandten Forschung e.V., 80686 München (DE)
(72) Erfinder: BÖSE, Holger, 97080 Würzburg (DE); GERLACH, Thomas, 97422 Schweinfurt (DE)
(74) Vertreter: Pfenning, Meinig & Partner GbR
(86) Internationale Anmeldenummer: PCT/EP2008/002900
(87) Internationale Veröffentlichungsnummer: WO 2008/125306

(56) Entgegenhaltungen:
- DE-A1- 19 910 782
- DE-A1-102004 041 650
- DE-C1- 19 801 752
- US-A- 5 158 109

## Beschreibung

Die vorliegende Erfindung betrifft eine Blockiervorrichtung oder ein Ventil, eine Türverschlussvorrichtung oder einen Schalthebel enthaltend eine solche Blockiervorrichtung, jeweils mit einer feldsteuerbaren Flüssigkeit (magnetorheologische und/oder elektrorheologische Flüssigkeit). Die Erfindung betrifft darüberhinaus ein Blockierverfahren, bei dem eine solche Blockiervorrichtung zum Einsatz kommt sowie die Verwendung einer solchen Blockiervorrichtung.

Magnetorheologische Flüssigkeiten (MRF) sind Suspensionen von magnetisch polarisierbaren Teilchen in einer Trägerflüssigkeit, deren Viskosität und andere rheologische Eigenschaften in einem Magnetfeld schnell und reversibel verändert werden können. In Analogie dazu sind elektrorheologische Flüssigkeiten (ERF) Suspensionen von elektrisch polarisierbaren Teilchen in einer nicht-leitenden Trägerflüssigkeit, deren rheologische Eigenschaften in einem elektrischen Feld schnell und reversibel verändert werden können. Beide Klassen von Flüssigkeiten (nachfolgend auch: feldsteuerbare Flüssigkeiten) bieten damit eine ideale Grundlage für Blockiervorrichtungen, deren Blockierzustand durch das Magnetfeld oder das elektrische Feld gesteuert wird.

Magnetorheologische Flüssigkeiten, wie sie in der vorliegenden Erfindung zum Einsatz kommen können, sind in der deutschen Patentschrift DE 10 2004 041 650 B4 beschrieben, welche hiermit in vollem Umfang als Bestandteil der vorliegenden Anmeldung eingeführt wird.

Aufgabe der vorliegenden Erfindung ist es, eine Blockiervorrichtung (und ein entsprechendes Blockierverfahren) zur Verfügung zu stellen, mit welchem auf mechanisch einfache, zuverlässige Art und Weise eine feldsteuerbare Blockierung realisierbar ist.

Diese Aufgabe wird durch eine Blockiervorrichtung nach Anspruch 1, eine Blockiervorrichtung nach Anspruch 6 sowie ein Blockierverfahren nach Anspruch 13 gelöst. Vorteilhafte Ausgestattungen der erfindunggemäßen Blockiervorrichtung ergeben sich aus den jeweils abhängigen Patentansprüchen. Erfindungsgemäße Verwendungen ergeben sich aus dem Anspruch 14.

Nachfolgend wird die nachfolgende Erfindung nun zunächst generell beschrieben, dieser generellen Beschreibung schließen sich sodann einzelne Ausführungsbeispiele an. Einzelne erfindungsgemäße Merkmale, wie sie nachfolgend beschrieben werden, können hierbei nicht nur in Kombinationen, wie sie in den speziellen vorteilhaften Ausführungsbeispielen gezeigt werden, auftreten, sondern können im Rahmen der vorliegenden Erfindung auch in beliebigen anderen Kombinationen ausgebildet sein bzw. verwendet werden.

Basis der erfindungsgemäßen Lösung ist der grundsätzliche Aufbau einer Blockiervorrichtung aus zwei Einheiten, einer Steuereinheit und einer Blockiereinheit, letztere nachfolgend alternativ auch als Arbeitseinheit bezeichnet. Auf Basis dieser Trennung in die beiden genannten Einheiten wird dann in der Steuereinheit eine feldsteuerbare Flüssigkeit (z.B. MRF) verwendet. Die Verwendung kann hierbei im Quetschmodus, im Schermodus oder im Fließmodus geschehen. Die Blockiereinheit kann wahlweise hydraulisch (unter Verwendung einer nicht-feldsteuerbaren, hydraulischen Flüssigkeit, welche am Durchfließen durch eine Durchströmungsöffnung gehindert wird) oder mechanisch (hier wird die nicht-feldsteuerbare, hydraulische Flüssigkeit durch ein mechanisches Element ersetzt) betrieben werden.

Gemäß der Erfindung ist, wie nachfolgend noch ausführlich beschrieben wird, eine Kolbeneinheit sowie ein Verriegelungssystem (alternativ auch als Verriegelungseinheit oder Verschlussteil bezeichnet) vorgesehen.

Das Verriegelungssystem kann hierbei aus einem Element, z.B. einem Verschlussbolzen, gebildet werden, es kann jedoch auch aus mehreren Elementen bestehen. Unter Kolbeneinheit wird im Folgenden eine mechanische Einheit (gegebenenfalls aus mehreren Elementen) beliebiger Form verstanden, welche vorteilhafterweise zumindest teilweise innerhalb eines Gehäuses angeordnet ist. Die Kolbeneinheit muss also nicht rotationssymmetrisch ausgebildet sein, sondern kann z.B. auch quaderförmig ausgestaltet sein.

Die Blockiervorrichtung weist zwei grundlegende Zustände auf: den verriegelten Zustand und den entriegelten Zustand. Diese beiden Zustände der Blockiervorrichtung bzw. des Verriegelungssystems und der Kolbeneinheit sind ineinander überführbar, indem die relative Position der Kolbeneinheit zum Verriegelungssystem verändert wird bzw. indem diese beiden Einheiten relativ zueinander bewegt werden. Der Zustand "verriegelt" wird hier in einem allgemeinen Kontext verwendet: Verriegelt kann beispielsweise bedeuten, dass das Verriegelungssystem die Kolbeneinheit blockiert, d.h. ihre Beweglichkeit innerhalb eines umgebenden Gehäuses hemmt oder unterbindet. Genauso kann "verriegelt" jedoch bedeuten, dass das Verriegelungssystem eine in der Kolbeneinheit ausgebildete Durchströmungsöffnung verschließt. Ebenso allgemein wird der Zustand "entriegelt" verstanden: Hier kann beispielsweise die relative Beweglichkeit der Kolbeneinheit in einem Gehäuse (oder auch in Bezug auf das Verriegelungssystem) freigegeben sein. Genauso wird hierunter jedoch beispielsweise der Zustand verstanden, in dem die vorgenannte Durchströmungsöffnung innerhalb der Kolbeneinheit geöffnet ist, d.h. durch die Verrieglungseinheit nicht verschlossen wird.

In einer besonders vorteilhaften erfindungsgemäßen Lösung sind zwei Oberflächen in der Steuereinheit vorgesehen, welche relativ zueinander bewegt werden können (entweder seitlich aneinander vorbei oder aufeinander zu- bzw. wegbewegt), so dass die feldsteuerbare Flüssigkeit in einem Zwischenraum zwischen diesen beiden Oberflächen in der Steuereinheit geschert und/oder gequetscht wird. Hierbei wird in diesem Zwischenraum durch einen Felderzeuger (Magnet oder Elektroden) ein Magnetfeld oder ein elektrisches Feld erzeugt, wodurch die Feldstärke in diesem Zwischenraum in der feldsteuerbaren Flüssigkeit verändert werden kann. Im Falle der Verwendung einer magnetorheologischen Flüssigkeit und eines Magneten (Elektromagneten) befindet sich der mit der MRF gefüllte Zwischenraum somit im Magnetkreissystem der Blockiervorrichtung. Analoges gilt im Falle der Verwendung von Elektroden, von einem elektrischen Feld und von einer elektrorheologischen Flüssigkeit. Wie nachfolgend noch näher beschrieben wird, kann durch eine Veränderung der magnetischen bzw. elektrischen Feldstärke eine entsprechende Veränderung der mechanischen Kopplung von zwei Steuerelementen der Steuereinheit, welche die vorbeschriebenen Oberflächen aufweisen, erfolgen. Hierdurch kann, wie nachfolgend noch genauer beschrieben, eine Relativbewegung (beispielsweise zwischen einer Kolbeneinheit und einem Verschlussteil bzw. einer Verschlusseinheit oder auch zwischen einer Verschlusseinheit und einem Gehäuseelement) in der Blockiereinheit gesteuert werden, wodurch sich eine Durchströmungsöffnung, welche zwei Kammern innerhalb eines Gehäuses verbindet, welche durch eine Kolbeneinheit (nachfolgend auch: Kolben) getrennt sind, schließen lässt. Durch einen solchen Verschluss kann der Fluss eines nicht-feldsteuerbaren Fluids zwischen den beiden Kammern innerhalb des Gehäuses unterbunden werden, wodurch sich die Bewegung der Kolbeneinheit innerhalb des Gehäuses entsprechend unterbinden lässt.

Ebenfalls ist es jedoch möglich, in einer besonders vorteilhaften, erfindungsgemäßen Lösung zwischen der Steuereinheit und der Blockiereinheit den Durchfluss einer feldsteuerbaren Flüssigkeit durch einen Spalt oder eine Durchflussöffnung durch Anlegen eines äußeren magnetischen bzw. elektrischen Feldes zu hemmen oder ganz zu unterbinden, damit einen Druck aüfzubauen und hiermit eine Blockierung auszulösen. Auch diese Ausgestaltungsvariante wird nachfolgend noch genauer beschrieben.

Die erfindungsgemäße Blockiervorrichtung weist gegenüber den aus dem Stand der Technik bekannten Blockiervorrichtungen eine Reihe erheblicher Vorteile auf:
- Ein besonderer Vorteil der vorliegenden Erfindung liegt ganz generell in der Trennung in eine Steuer- und in eine Arbeits- bzw. Blockiereinheit. Der wesentliche Vorteil dieses hybriden Arbeitsprinzips gegenüber einer rein magnetorheologischen oder elektrorheologischen Blockierung liegt in der nahezu unbegrenzten Blockierkraft, welche auf diese Weise erreicht werden kann. Hierdurch muss insbesondere auch die relativ schwere, die MRF bzw. die ERF enthaltende Einheit nicht so groß ausgelegt werden, was mit einem geringeren Energiebedarf verbunden ist.
- Durch die erfindungsgemäße Blockiervorrichtung wird ein einfaches, mechanisch nicht komplexes System realisiert.
- Bei der Verwendung von zwei gegeneinander beweglichen Oberflächen können durch die im Magnetfeld bzw. im elektrischen Feld erstarrten Flüssigkeiten (MRF bzw. ERF) diese beiden Oberflächen auf einfache Art und Weise mechanisch fest aneinander gekoppelt werden. Hierdurch ist auf einfache und zuverlässige Art und Weise eine Blockierung bzw. die Lösung einer Blockierung in der Blockiervorrichtung möglich.
- Beim Einsatz der feldsteuerbaren Flüssigkeit, insbesondere der magnetorheologischen Flüssigkeit MRF, im Quetsch- bzw. Scherbetrieb werden erheblich geringere Anforderungen an die Eigenschaften der feldsteuerbaren Flüssigkeit gestellt und es ist ein deutlich zuverlässigerer Betrieb der Blockiervorrichtung möglich. Beispielsweise kann im Grundzustand eine MRF ohne Magnetfeld sehr zähflüssig sein, es können sogar anstelle einer MRF beispielsweise nicht eigenfließfähige, magnetorheologische Gele eingesetzt werden. Damit werden Probleme vermieden, welche aufgrund einer Sedimentation der magnetischen Partikel in der MRF auftreten. Entsprechendes gilt für elektrorheologische Flüssigkeiten.
- Der Vorteil der Variante im Fließmodus besteht darin, dass keine zueinander beweglichen und in definiertem Abstand zueinander zu führenden Teile verwendet werden müssen.

Anwendungsfelder der erfindungsgemäßen Blockiervorrichtung sind insbesondere mechanische und/oder elektrische Verschlüsse (z.B. elektrischer Kontakt) oder Blockiermechanismen oder temporäre Fixierungen. Mögliche Anwendungen der erfindungsgemäßen Blockiervorrichtung sind insbesondere elektrisch steuerbare Blockierungen von beweglichen Teilen, die temporär fixiert werden sollen. Beispiele hierfür sind Türen, Fenster, Klappen oder Bedienelemente, wie z.B. Schalthebel, Druck - oder Drehknöpfe, die gegen Fehlbedienung gesichert werden sollen.

Die vorliegende Erfindung beschreibt somit eine Blockiervorrichtung, welche sich im Wesentlichen in zwei Einheiten, eine Steuereinheit und eine Blockiereinheit, einteilen lässt. In der Steuereinheit, welche die magnetorheologische oder die elektrorheologische Flüssigkeit enthält, werden vorteilhafterweise zwei gegeneinander bewegliche Oberflächen, zwischen denen sich im Zwischenraum die MRF bzw. die elektrorheologische Flüssigkeit befindet, durch Anlegen eines magnetischen bzw. elektrischen Feldes (welches dann den Zwischenraum überstreicht) mechanisch fest miteinander gekoppelt. Bei ausreichend hoher Feldstärke können die beiden Oberflächen nicht mehr relativ zueinander bewegt werden. Nach dem Abschalten des Feldes können beide Oberflächen wieder vollständig ohne einen felderzeugten Widerstand zueinander bewegt werden, wobei in Bezug auf die magnetorheologische oder elektrorheologische Flüssigkeit eine Scherbewegung und/oder eine Quetschbewegung erfolgt.

In der zweiten Einheit, der Blockiereinheit, welche eine nicht-feldsteuerbare Flüssigkeit (oder auch ein Gas) enthält, wird durch die vorbeschriebene Kopplung eine Kolbeneinheit bzw. ein Kolben verriegelt.

Vorteilhafterweise weist die Blockiereinheit bzw. die Arbeitseinheit einen Kolben mit einer Dürchströmungsöffnung, ein Verriegelungssystem (Verschlussteil) sowie eine nicht-feldsteuerbare Flüssigkeit auf. Das Verriegelungssystem kann jedoch alternativ auch als Teil der Steuereinheit vorgesehen sein. Bei der Bewegung des Kolbens wird vorteilhafterweise die nicht feldsteuerbare Flüssigkeit durch eine Durchströmungsöffnung zwischen zwei durch den Kolben voneinander getrennte Kammern transportiert, solange die Durchströmungsöffnung nicht durch das Verriegelungssystem verschlossen ist. Vorteilhafterweise wird durch Verschließen der Öffnung die Bewegung des Kolbens blockiert.

Vorteilhafterweise sind hierbei wie nachfolgend noch näher beschrieben, das Verriegelungssystem und ein Schaltelement (mit welchem die Kolbeneinheit bewegbar ist, insbesondere eine Schaltstange) mechanisch starr mit den beiden Oberflächen in der Steuereinheit verbunden, zwischen denen sich die magnetorheologische oder die elektrorheologische Flüssigkeit befindet. Es ist jedoch auch möglich, dass lediglich das Schaltelement mit einer der beiden Oberflächen in der Steuereinheit mechanisch starr verbunden ist.

Vorteilhafterweise werden die beiden gegeneinander beweglichen Oberflächen der Steuereinheit bzw. die entsprechenden Steuerelemente durch zwei konzentrisch ineinander geschobene Zylinderelemente (Rohre) oder durch zwei planparallele Platten, welche parallel zueinander angeordnet sind und seitlich gegeneinander verschoben werden können oder aufeinander zu und voneinander weg bewegt werden können, gebildet. Die Kolbeneinheit kann vorteilhafterweise so ausgestaltet sein, dass der Kolben in der Blockiereinheit eine Linearbewegung ausführt. Das magnetische bzw. elektrische Feld verläuft hierbei vorteilhafterweise senkrecht zu den beiden Oberflächen der Steuerelemente und durchdringt den Spalt zwischen den Oberflächen bzw. den Zwischenraum. Wird eine magnetorheologische Flüssigkeit verwendet, so befinden sich die gegeneinander beweglichen Oberflächen vorteilhafterweise in einem Magnetkreis mit einer Spule, wobei der in der Spule fließende Strom das Magnetfeld erzeugt. Im Fall einer elektrorheologischen Flüssigkeit bilden vorteilhafterweise die beiden gegeneinander beweglichen Oberflächen auch die Elektroden, zwischen denen das elektrische Feld ausgebildet wird. Durch das magnetische bzw. elektrische Feld werden die gegeneinander beweglichen Oberflächen über die versteifte magnetorheologische bzw. elektrorheologische Flüssigkeit kraftschlüssig miteinander fest verbunden (kraftschlüssige Verbindung), so dass bei ausreichend hoher Feldstärke die Beweglichkeit der beiden Oberflächen gegeneinander aufgehoben wird. Wenn ein ausreichend hohes Feld angelegt ist, erfolgt somit eine Versteifung der feldsteuerbaren Flüssigkeit und eine feste Kopplung der beiden Steuerelemente bzw. Oberflächen, also die vorbeschriebene Blockierung.

Eine andere vorteilhafte Möglichkeit besteht darin, den Durchfluss einer magnetorheologischen oder einer elektrorheologischen Flüssigkeit durch eine Durchflussöffnung mittels des magnetischen bzw. elektrischen Feldes zu hemmen bzw. zu unterbinden und damit einen Druck aufzubauen, welcher die Blockierung auslöst.

In einer vorteilhaften Ausgestaltungsvariante besteht die Blockiervorrichtung somit aus einer Steuereinheit, die ein magnetorheologisches oder elektrorheologisches Material enthält sowie einer Blockiereinheit (Blockiereinheit), die gegeneinander bewegliche Teile sowie ein nicht-feldsteuerbares Fluid und/oder mechanische Verriegelungselemente enthält. Hierbei weist die Steuereinheit mindestens zwei gegeneinander bewegliche Oberflächen, zwischen denen das magnetorheologische oder elektrorheologische Material einer Scherbewegung und/oder einer Quetschbewegung unterziehbar ist auf oder einen Spalt (Durchflussöffnung), durch welchen das magnetorheologische oder elektrorheologische Material hindurchdrückbar ist. Die Steuereinheit enthält hierbei die Magnetfelderzeugung (oder die Erzeugung für das elektrische Feld), welche das feldsteuerbare Material zwischen den Oberflächen oder im genannten Spalt versteift. Die Blockiereinheit enthält entweder einen Verschlusskolben, welcher zwei mit einem nicht-feldsteuerbaren Fluid gefüllte Kammern voneinander trennt, welche durch ein aus mindestens zwei gegeneinander beweglichen Teilen gebildetes und damit verschließbares Ventil miteinander verbunden sind, oder die Blockiereinheit enthält ein oder mehrere Verriegelungselemente, wodurch die Bewegung mindestens eines beweglichen Teils blockiert wird. Die Blockiervorrichtung kann hierbei so ausgestaltet sein, dass der Kolben in der Blockiereinheit eine Linearbewegung ausführt oder dass er eine Drehbewegung (siehe nachfolgender Absatz) ausführt. Vorteilhafterweise können die gegeneinander beweglichen Teile, insbesondere diejenigen in der Blockiereinheit (Verschlusskolben oder Verriegelungselemente) durch mindestens ein Federelement in einer Gleichgewichtsstellung gehalten werden.

Es ist jedoch in einer anderen vorteilhaften Ausgestaltung auch möglich, die erfindungsgemäße Blockiervorrichtung statt auf Basis einer Linearkolbeneinheit auf Basis einer Drehkolbeneinheit aufzubauen. Es wird dann eine Bewegung des Drehkolbens blockiert. Hierbei werden ebenfalls eine Steuer- und eine Blockiereinheit in der Blockiervorrichtung realisiert. Wie beim Linearblockierer wird entsprechend in der Blockiereinheit die Bewegung des Drehkolbens durch das Unterbinden des Hindurchströmens der durch den Drehkolben verdrängten, nicht feldsteuerbaren Flüssigkeit durch einen Spalt (Durchströmungsöffnung bzw. Ventilspalt) verhindert. Das Verschließen der Durchströmungsöffnung blockiert somit die Vorrichtung. Mindestens eines der die Durchströmungsöffnung bildenden, gegeneinander beweglichen Teile ist vorteilhafterweise mit einer der gegeneinander beweglichen Oberflächen in der Steuereinheit mechanisch starr verbunden. Die beiden Oberflächen in der Steuereinheit, zwischen denen sich die magnetorheologische oder elektrorheologische Flüssigkeit in einem Zwischenraum befindet, sind ebenso wie beim Linearblockierer in einen Magnetkreis integriert bzw. dienen als Elektroden zur Erzeugung des elektrischen Feldes. Es ist erfindungsgemäß also sowohl die Blockierung einer translatorischen Bewegung als auch die Blockierung einer rotatorischen Bewegung möglich.

Eine weitere Möglichkeit besteht darin, dass diejenigen beweglichen Teile, welche letztendlich in der Blockiereinheit, in der Steuereinheit oder zwischen der Blockiereinheit und Steuereinheit den Verriegelungszustand von Verriegelungssystem und Kolbeneinheit verändern bzw. steuern, untereinander oder miteinander durch mindestens ein Federelement verbunden in einer Gleichgewichtsposition zueinander gehalten werden. Damit wird eine Voreinstellung des Blockierzustands ohne angelegtes Feld vorbestimmt.

In einer weiteren vorteilhaften Ausgestaltungsvariante ist es möglich, im Magnetkreis der Steuereinheit und/oder zwischen Steuer- und Blockiereinheit indestens einen Permanentmagneten neben einem Elektromagneten vorzusehen. Durch eine solche Integration eines zusätzlichen Permanentmagneten, der ebenfalls das Magnetfeld für die magnetorheologische Flüssigkeit im Zwischenraum oder in der Durchflussöffnung beeinflusst, kann ein Blockierzustand der Vorrichtung ohne Energieaufwand erzeugt werden (Einstellung des Arbeitspunktes der Blockiervorrichtung; es ist eine mechanische Kopplung der beiden Oberflächen ohne Stromfluss in der Spule des Elektromagneten möglich). Weitere vorteilhafte Ausgestaltungsvarianten bestehen darin, dass als feldsteuerbares Material anstatt einer MRF ein magnetorheologisches Gel (MRG), ein magnetorheologisches Elastomer (MRE) oder ein magnetorheologischer Schaum (MRS) oder eine Kombination aus solchen Materialien verwendet wird. Ein MRG ist hierbei ein Material, welches im Gegensatz zu einer MRF zwar weich, aber nicht flüssig ist. In Analogie zu einer MRF kann es irreversibel beliebig deformiert werden und sich im Magnetfeld analog zu einer MRF versteifen. Ein MRE ist ein vernetztes Material, welches daher eine vorgegebene Form aufweist, aus der es reversibel nur begrenzt deformiert werden kann. Ein MRS ist ein Elastomerschaum, dessen Poren mit einer MRF gefüllt sind. Wie das MRE weist auch ein MRS eine vorgegebene Form auf, aus der er reversibel nur begrenzt deformiert werden kann. Im Falle von MRE oder MRS kann durch die Elastizität des Materials gleichzeitig eine Rückstellkraft zwischen den gegeneinander beweglichen Oberflächen erzeugt werden, die diese nach dem Abschalten des Magnetfelds wieder in ihre jeweilige Ausgangsposition zurückstellt.

In einer weiteren vorteilhaften Ausgestaltungsvariante kann als feldsteuerbares Material anstatt einer elektrorheologischen Flüssigkeit ERF ein elektrorheologisches Gel (ERG), ein elektrorheologisches Elastomer (ERE) oder ein elektrorheologischer Schaum (ERS) verwendet werden. Diese Materialien sind ganz analog definiert wie die entsprechenden magnetorheologischen Materialien bzw. weisen die Eigenschaften der entsprechenden magnetorheologischen Materialien auf.

Eine besonders vorteilhafte Auswahl der nicht-feldsteuerbaren Flüssigkeit liegt darin, die gleiche Flüssigkeit, die auch als Trägerflüssigkeit in der magnetorheologischen oder elektrorheologischen Flüssigkeit eingesetzt wird, auch als nicht-feldsteuerbare Flüssigkeit zu verwenden.

Anstelle des Einsatzes einer nicht-feldsteuerbaren Flüssigkeit kann auch ein Gas verwendet werden.

Nachfolgend wird die nachfolgende Erfindung an einzelnen Ausführungsbeispielen beschrieben. In den einzelnen Figuren, welche zu den Ausführungsbeispielen gehören, sind hierbei gleiche oder sich entsprechende Elemente der Dämpfungsvorrichtung mit identischen Bezugszeichen bezeichnet.

Es zeigen:
- Figur 1: eine nicht die Erfindung zeigende Blockiervorrichtung, welche als Linearblockierer ausgebildet ist (hydraulische Blockierung) und welche einzelne Aspekte der Erfindung zeigt und zum Verständnis der Erfindung notwendig ist.
- Figur 2: eine erste erfindungsgemäße Linearblockiervorrichtung (mechanische Blockierung).
- Figur 3: eine zweite erfindungsgemäße Linearblockiervorrichtung (mechanische Blockierung).
- Figur 4: eine dritte erfindungsgemäße Linearblockiervorrichtung (hydraulische Blockierung).
- Figur 5: eine nicht die Erfindung zeigende Drehblockiervorrichtung (hydraulische Blockierung), welche jedoch einzelne Aspekte der Erfindung zeigt.

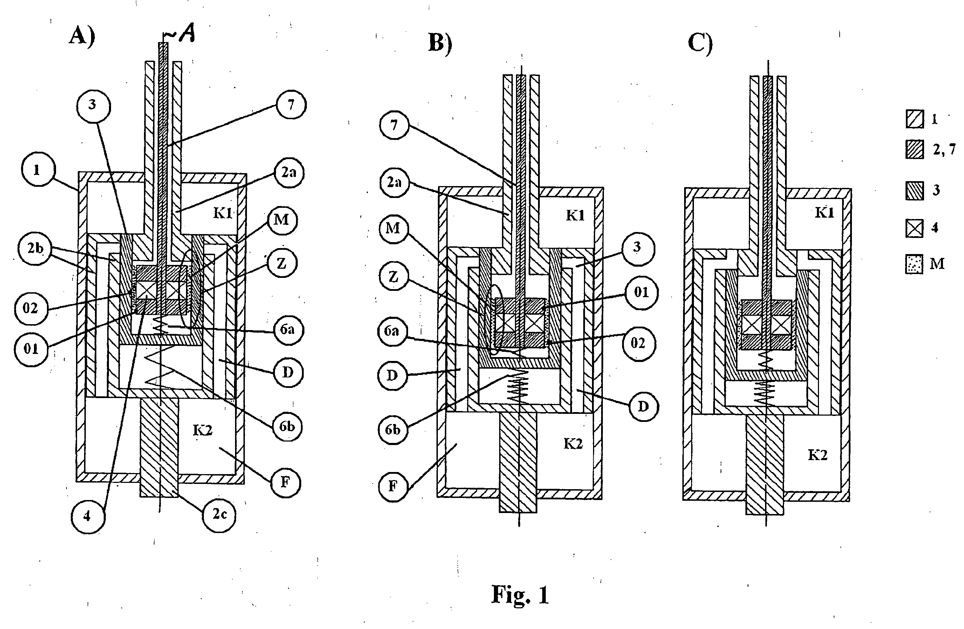

Figur 1 zeigt eine Blockiervorrichtung, welche als hydraulischer Linearblockierer (= Blockierung einer translatorischen Bewegung) aufgebaut ist. Die Blockiervorrichtung umfasst ein Gehäuse 1. In diesem Gehäuse 1 ist eine Kolbeneinheit 2 angeordnet. Die Kolbeneinheit 2 ist innerhalb des Gehäuses 1 längs einer Symmetrieachse A des Gehäuses 1, also relativ zum Gehäuse 1 bewegbar. Gehäuse 1 und Kolbeneinheit 2 bilden hierbei konzentrisch ineinander angeordnete Zylindereinheiten. In die Kolbeneinheit 2 ist konzentrisch die Schaltstänge 7 eingeschoben. Auch diese ist längs der Achse A relativ zur Kolbeneinheit 2 und relativ zum Gehäuse 1 verschiebbar. Figur 1 zeigt einen Schnitt durch die zentrale Symmetrieachse A in Längsrichtung dieser Einheit. Die Vorrichtung ist somit rotationssymmetrisch um diese Achse A. Die Kolbeneinheit besteht aus einem oberen Kolbenelement 2a, welches durch die obere Deckelfläche des Gehäuses 1 in das Gehäuse einragt, aus einem mit diesem verbundenen mittleren Kolbenelement 2b (eigentlicher Kolben) und aus einer mit diesem Element 2b verbundenen unteren Kolbenelement 2c, welches durch die untere Deckelfläche des Gehäuses 1 in das Gehäuse 1 einragt. Durch den eigentlichen Kolben 2b werden innerhalb des Gehäuses 1 zwei Kammern K1 und K2 getrennt, welche ein konstantes Gesamtvolumen aufweisen, wobei sich deren Einzelvolumina jedoch durch Verschiebung des Kolbens 2 innerhalb des Gehäuses 1 ändern. Die Kolbeneinheit 2b weist eine Durchströmungsöffnung D auf, welche die beiden Kammern K1 und K2 miteinander verbindet. Bei Verschiebung des Kolbens 2 innerhalb des Gehäuses 1 strömt somit je nach Bewegungsrichtung ein nicht-feldsteuerbares Fluid F von der Kammer K1 in die Kammer K2 oder umgekehrt.

Konzentrisch innerhalb des eigentlichen Kolbens 2b ist die Verrieglungseinheit 3 angeordnet, innerhalb der wiederum konzentrisch der untere Abschnitt der Schaltstange 7, mit welchem die Spule 4 des Elektromagneten mechanisch fest verbunden ist, angeordnet ist. Die Verschlusseinheit 3 ist entlang der Achse A relativ zum Kolben 2b und zum Gehäuse 1 verschieblich, so dass je nach Stellung der Verrieglungseinheit 3 relativ zum eigentlichen Kolben 2b die Durchströmungsöffnung D entweder verschlossen oder geöffnet ist.

Zwischen der Innenwand der Verschlusseinheit 3 und dem unteren Abschnitt der Schaltstange 7 ist im Zwischenraum Z die magnetorheologische Flüssigkeit M angeordnet. Der äußere Umfang des unteren Abschnitts der Schaltstange 7 mit der Spule 4 des Elektromagneten bildet die erste Oberfläche O1 des ersten Steuerelements. Die diesem Außenumfang gegenüberliegende Innenwand des Verriegelungssystems 3 bildet die zweite Oberfläche 02 des zweiten Steuerelements. Der untere Abschnitt der Schaltstange 7 ist über eine Rückstellfeder 6a mit der Innenwand des Bodenabschnitts des Verriegelungssystems 3 verbunden. Die (dem Element 2c zugewandte) Außenwand des Bodenabschnitts des Verriegelungssystems 3 ist mit einer Verschlussfeder 6b mit dem oberen Abschnitt der unteren Kolbenstangeneinheit 2c verbunden.

Die gezeigte Blockiervorrichtung ist als Ventil ausgestaltet. Hierbei erfolgt eine Verriegelung in Form eines mechanischen Verschlusses der Durchströmungsöffnung D der Kolbeneinheit 2b durch das Verschlusselement 3. Die Funktionsweise der Vorrichtung wird nun im Folgenden beschrieben, wobei Figur 1A den geschlossenen Zustand des Ventils (Ausgangszustand: bevor Schaltstange 7 nach unten bewegt wird), Figur 1B den verriegelten Zustand (ohne angelegtes Magnetfeld) und Figur 1C den entriegelten Zustand (mit angelegtem Magnetfeld) des Ventils zeigt.

Zunächst ist die Blockiervorrichtung durch das Verriegelungssystem 3 komplett geschlossen (Verschluss des Kanals D). Soll die Blockiervorrichtung entriegelt werden (Öffnung des Kanals D), so muss die Verschlusseinheit 3 relativ zum Kolben 2b bewegt werden (nach unten). Dies geschieht mit der Schaltstange 7, welche relativ zum Kolben 2 beweglich ist: Wirkt kein magnetisches Feld auf die MRF M im Zwischenraum Z, so bleibt das Verschlussteil 3 (siehe Fig. 1B) trotz einer Bewegung der Schaltstange 7 in seiner Position wie in Figur 1A gezeigt und das Ventil bleibt geschlossen (es ist kein Durchfluss der nichtfeldsteuerbaren Flüssigkeit F zwischen den Kammern K1 und K2 möglich, es kann somit auch keine Bewegung der Kolbeneinheit 2 relativ zum Gehäuse 1 stattfinden). Wird nun jedoch mittels der Spule 4 im Zwischenraum Z ein ausreichend starkes Magnetfeld erzeugt, so versteift sich die MRF in diesem Zwischenraum Z, wodurch die Schaltstange 7 mechanisch fest (kraftschlüssig) mit dem Verriegelungssystem 3 gekoppelt wird. Durch eine Bewegung der Schaltstange 7 nach unten wird somit die Verschlusseinheit 3 ebenfalls nach unten bewegt, wodurch die Durchströmungsöffnung D geöffnet wird (Kopplung des Verschlussteils 3 an die Schaltstange 7). Auf diese Weise wird somit das Ventil geöffnet (Fig. 1C).

Die Verschlussfeder 6b ist hier als Druckfeder ausgestattet, welche im entspannten Zustand dafür sorgt, dass das Verschlusselement 3 die Durchströmungsöffnung D verschließt. Das Verschlusselement 3 muss somit mittels der Schaltstange 7 wie vorbeschrieben gegen diese Federkraft bewegt werden, um das Ventil zu öffnen. Im Ruhezustand (ohne Feld) sorgt die Rückstellfeder 6a dafür, dass die Schaltstange 7 die in Figur 1A gezeigte Position innerhalb des Kolbens 2 einnimmt (weitestmöglich innerhalb des Kolbens nach oben geschoben).

Im vorgestellten Beispiel gehören zur Steuereinheit die Rückstellfeder 6a, das Verschlusselement 3, die Schaltstange 7 sowie der Elektromagnet bzw. die Spule 4. Zur Blockiereinheit gehören die Kolbeneinheit 2, das Gehäuse 1 sowie die Verschlussfeder 6b.

Diese Ausgestaltungsform zeigt somit eine Blockiervorrichtung mit magnetorheologischer Flüssigkeit unter einer Scherbewegung im Zwischenraum Z, wobei die erste Oberfläche O1 als Teil der Schaltstange 7 und der Spule 4 ausgebildet ist und die zweite Oberfläche 02 als Teil des Verriegelungssystems 3.

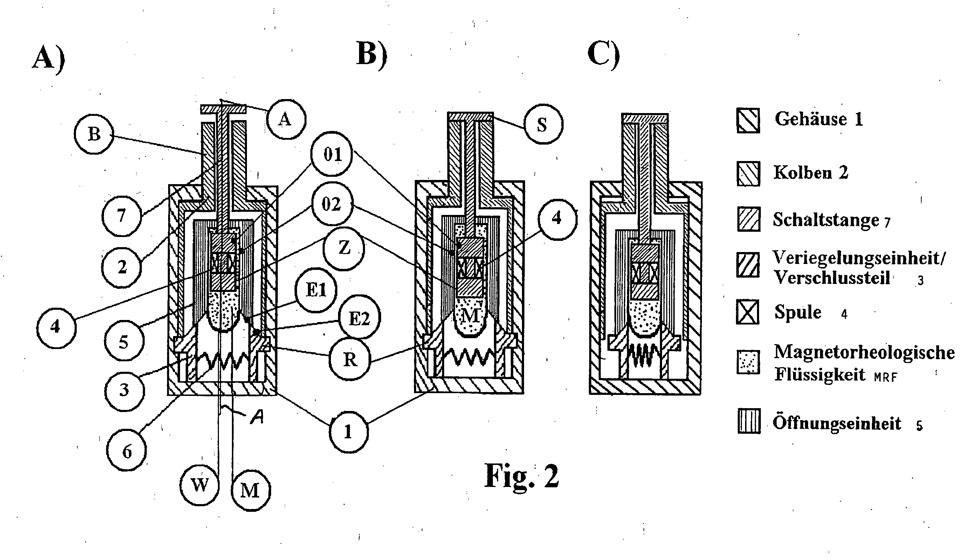

Figur 2 zeigt eine erfindungsgemäße, jetzt mechanische Linearblockiervorrichtung, welche bis auf die nachfolgend beschriebenen Unterschiede entsprechend der in Figur 1 gezeigten Vorrichtung aufgebaut ist bzw. verwendet wird.

Figur 2A und Figur 2B zeigen hierbei den verriegelten Zustand der Blockiervorrichtung. Figur 2C zeigt den entriegelten Zustand der Blockiervorrichtung. Die Vorrichtung ist wiederum zylindersymmetrisch um die Symmetrieachse A aufgebaut. Es handelt sich um einen mechanischen Blockiermechanismus, der durch eine magnetorheologische Flüssigkeit M gesteuert wird.

Innerhalb des Gehäuses 1 sind konzentrisch, jeweils ineinander geschoben (und gesehen von außen nach innen zur Achse A hin) die folgenden Elemente der Blockiervorrichtung angeordnet: Zunächst der Kolben 2, dann in diesen konzentrisch eingeschoben und beabstandet von ihm die Öffnungseinheit 5. Der obere Abschnitt der Schaltstange 7 ist konzentrisch in den oberen Abschnitt des Kolbens 2 eingeschoben; der untere, verdickte Abschnitt der Schaltstange 7 (an welchem die Spule 4 befestigt ist) ist konzentrisch in die Öffnungseinheit 5 eingeschoben. Alle diese vorgenannten Elemente 1, 2, 5 und 7 (mit 4) sind relativ zueinander, sofern keine Fixierung erfolgt, entlang der Achse A bewegbar.

Der Außenumfang des unteren Abschnitts der Schaltstange 7 (mit der Spule 4) bildet die erste Oberfläche O1 des ersten Steuerelements. Die diesem Außenumfang gegenüberliegende Innenwandfläche der Öffnungseinheit 5 bildet die zweite Oberfläche 02 des zweiten Steuerelements. Zwischen den beiden Oberflächen 01 und 02 ist im Zwischenraum Z die magnetorheologische Flüssigkeit M angeordnet. Die Öffnungseinheit 5 stellt hier einen Hohlzylinder dar, welcher nach unten durch das Wandelement W sowie die nachfolgend noch näher beschriebene Schrägfläche E1 abgeschlossen ist und welcher nach oben durch die flüssigkeitsdichte Hindurchführung der Schaltstange 7 durch die obere Deckelfläche (der Öffnungseinheit 5) abgeschlossen ist. Auf diese Weise wird ein Austreten der magnetorheologischen Flüssigkeit M verhindert.

Innerhalb des Gehäuses 1 und unterhalb der Einheiten 2, 7 (mit 4) und 5 ist das Verriegelungssystem 3 angeordnet. Dieses besteht aus zwei näherungsweise halbkreisförmigen Zylinderhohlwandelementen, welche durch eine Abstandsfeder 6 im Ruhezustand seitlich gegen die Innenwandflächen des Gehäuses 1 gedrückt werden. Da der untere Abschnitt des Kolbens 2 in dieser Stellung unmittelbar auf einen außenumfangsseitig des Verriegelungssystems 3 angeordneten Ring R (welcher selbst Teil der Einheit 3 ist) aufsteht, ist in diesem Zustand, wie in Figur 2A gezeigt, keine Bewegung des Kolbens 2 innerhalb des Gehäuses 1 möglich (verriegelter Zustand).

Der untere Abschnitt der Öffnungseinheit 5 weist nun außenumfangsseitig in Bezug auf die Achse A und in Bezug auf eine Ebene senkrecht zur Achse A unter einem Winkel größer 0° und kleiner 90° (bevorzugt: jeweils 45°) stehende, also abgeschrägte untere Endflächen E1 auf. Ebenso weist der obere Abschnitt des Verriegelungssystems 3 außenumfangsseitig abgeschrägte obere Endflächen E2 auf. Die Endflächen E1 und E2 verlaufen parallel zueinander und greifen, da die Fläche E1 radial gesehen einen etwas geringeren Abstand von der Achse A aufweist, seitlich versetzt ineinander ein.

Die Funktionsweise der gezeigten Blockiervorrichtung ist nun wie folgt: Wenn die Schaltstange 7 mechanisch nach unten gedrückt wird, sind zwei verschiedene Zustände möglich: Bei ausgeschaltetem Strom in der Spule 4 (Figur 2B) bewegt sich die Schaltstange 7 zunächst frei nach unten, bis der auskragende Stempel S an ihrem oberen Abschnitt auf die obere Begrenzungsfläche B des Kolbens 2 trifft. Der Kolben 2 kann nun aufgrund der Blockade (vorbeschriebenes Aufstehen) seines unteren Abschnitts auf dem Ring R der Verschlusseinheit 3 nicht nach unten bewegt werden (Verriegelung der Vorrichtung).

Wird nun jedoch in der Spule 4 ein Strom eingeschaltet, so versteift sich die MRF M im Zwischenraum Z: Durch diese Versteifung wird mit der Schaltstange 7 die Öffnungseinheit 5 fest verkoppelt, so dass sich bei Bewegung der Stange 7 nach unten nun auch die Öffnungseinheit 5 (welche sich im feldabgeschalteten Zustand nicht relativ zum Gehäuse bewegt hat) nach unten mitbewegt. Durch die Verzahnung des unteren Abschnitts der Öffnungseinheit 5 mit dem oberen Abschnitt der Verschlusseinheit 3 (Ineinandergreifen der beiden parallelen Oberflächen E1 und E2) werden nun durch die Abwärtsbewegung der Öffnungseinheit 5 die beiden halbkreisförmigen Teile des Verriegelungssystems 3 entgegen der Spannkraft der Druckfeder 6 nach innen (d.h. zur Zentralachse A hin) gedrückt. Somit gibt die Verriegelungsvorrichtung 3 aufgrund der Bewegung des Aufstandrings R nach innen zur Achse A hin die Bewegung des Kolbens 2 nach unten hin frei (rechts Figur 2C). Die Blockierung ist somit nur dann aufgehoben, wenn in der Spule 4 ein Strom fließt.

Hier wird erfindungsgemäß die magnetorheologische Flüssigkeit M im Schermodus eingesetzt.

Zur Steuereinheit gehören im gezeigten Fall die Öffnungseinheit 5, die Schaltstange 7 sowie die fest mit dieser Einheit 7 verbundene Spule 4. Zur Arbeitseinheit (Blockiereinheit) gehören der Kolben 2, das Gehäuse 1, das Verschlusselement 3 sowie der Abstandshalter (Feder) 6, welcher im in Figur 2A gezeigten Fall (Ruhezustand) die beiden Teilelemente der Verschlusseinheit 3 radial nach außen drückt.

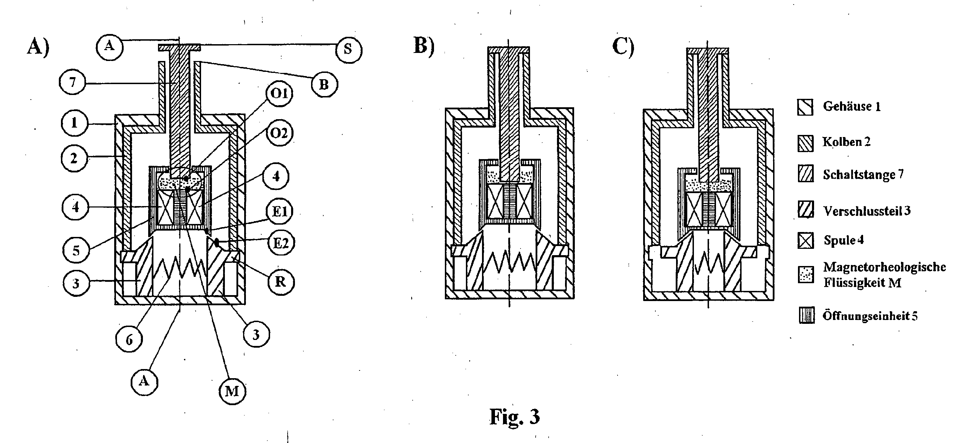

Figur 3 zeigt eine weitere erfindungsgemäße, mechanische Linearblockiervorrichtung. Diese ist grundsätzlich ähnlich wie die in Figur 2 gezeigte Vorrichtung aufgebaut (dies betrifft insbesondere die Elemente 1, 2, 3 und 6), die Unterschiede werden nun nachfolgend beschrieben.

Im Inneren der Öffnungseinheit 5 (deren unterer äußerer Abschnitt wie in Figur 2 aufgebaut ist und somit entsprechend mit der Schrägfläche E1 in die Schrägfläche E2 der Verschlusseinheit 3 eingreift) ist ein Hohlraum ausgebildet. In diesen ragt durch die obere Deckelfläche der Öffnungseinheit 5 die Schaltstange 7 ein. Im oberen Abschnitt dieses Hohlraums, in welchen die Schaltstange 7 einragt, ist der Zwischenraum Z ausgebildet, welcher mit der magnetorheologischen Flüssigkeit M gefüllt ist. Im unteren Abschnitt des Hohlraums ist konzentrisch um die Achse A die Spule 4 des Elektromagneten angeordnet. Die obere Fläche der Spule 4 samt der oberen Fläche des Spulenkerns bildet innerhalb des Hohlraums die zweite Oberfläche 02 des zweiten Steuerelements aus. Die untere Bodenfläche der Schaltstange 7 bildet die erste Oberfläche O1 des ersten Schaltelements. Im in Fig. 3 gezeigten Ruhezustand steht die Einheit 5 aufgrund ihrer Gewichtskraft auf der Einheit 3 auf, ohne jedoch die Federkraft (siehe nachfolgend) der Feder 6 zu überwinden.

Die gezeigte Vorrichtung funktioniert nun entsprechend des in Figur 2 vorgestellten Prinzips; die MRF M wird hier allerdings im Quetschmodus verwendet (Fig. 3A zeigt den Ausgangszustand bevor das Schaltelement 7 nach unten bewegt wird, Fig. 3B den verriegelten Zustand ohne Feld und Fig. 3C den entriegelten Zustand mit Magnetfeld). Solange kein magnetisches Feld auf die Flüssigkeit M wirkt, kann die MRF durch eine Bewegung der Schaltstange 7 nach unten aus dem Zwischenraum Z (zwischen den beiden Quetschoberflächen O1 und 02) im Hohlraum innerhalb der Öffnungseinheit 5 radial nach außen verdrängt werden. Damit bleiben die Öffnungseinheit 5 und die Verschlusseinheit 3 in ihrer Position (bewegen sich also relativ zum Gehäuse 1 nicht). Hierdurch bleibt der Kolben 2 durch die Aufstandsfläche R der Verschlusseinheit 3 verriegelt. Der Kolben kann sich somit ohne Magnetfeld nicht bewegen. Wird nun jedoch ein magnetisches Feld durch einen Stromfluss in der Spule 4 angelegt, kann die MRF im Zwischenraum Z nur noch schwer bzw. nicht mehr radial nach außen innerhalb des Hohlraums in der Öffnungseinheit 5 verdrängt werden. Es wird somit eine Kraft auf die Öffnungseinheit 5 nach unten ausgeübt. Durch diese Kraft wird die Öffnungseinheit 5 nach unten bewegt und öffnet durch das Ineinandergleiten der Oberflächen E1 und E2 das Verschlusselement 3, indem dessen Bauelemente entgegen der Federkraft der Feder 6 nach innen zur Achse A hin bewegt werden. Auf diese Weise kann dann bei aufgehobener Verriegelung der Kolben 2 innerhalb des Gehäuses 1 (und relativ zu diesem) nach unten bewegt werden.

Zur Steuereinheit gehören im vorliegenden Fall die Öffnungseinheit 5, die Schaltstange 7 sowie die Spule bzw. der Elektromagnet 4. Zur Blockiereinheit gehören der Kolben 2, das Gehäuse 1, das Verschlusselement 3 sowie das Federelement 6.

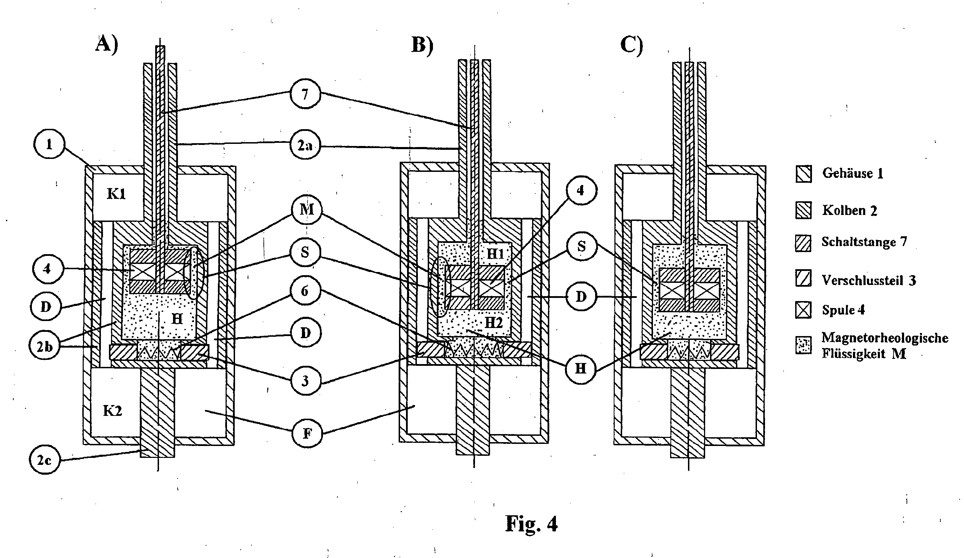

Figur 4 zeigt eine weitere erfindungsgemäße, jetzt wieder hydraulische Linearblockiervorrichtung. Auch diese Vorrichtung ist entsprechend der in Figur 1 gezeigten Vorrichtung aufgebaut, so dass nachfolgend nur die Unterschiede zu dieser Vorrichtung beschrieben werden (Fig. 4A zeigt den Ausgangszustand vor Bewegen der Schaltstange 7 nach unten (geöffneter Zustand), Fig. 4B den verriegelten Zustand (mit Feld) und Fig. 4C den entriegelten Zustand (ohne Magnetfeld)) :
Der eigentliche Kolben 2b weist radial beabstandet von der Zentralachse A von innen nach außen zunächst einen Hohlraum H, dann eine Durchströmungsöffnung D zwischen den beiden Kammern K1 und K2 auf. Im oberen Bereich des Hohlraums H ist die Schaltstange 7 konzentrisch eingeschoben innerhalb des eigentlichen Kolbens 2b (sowie mit ihrem oberen Abschnitt auch innerhalb des oberen Kolbenstangenelements 2a) angeordnet. Der untere Abschnitt der Schaltstange 7 ist hierbei gegenüber dem oberen Abschnitt verdickt und trägt die Spule 4 des Elektromagneten. Der Hohlraum H ist mit der magnetorheologischen Flüssigkeit M gefüllt. Zwischen dem Außenumfang des verdickten Abschnitts des unteren Schaltstangenteils und derjenigen Innenwand des eigentlichen Kolbens 2b, welcher den Hohlraum H (von der Achse A gesehen) nach außen begrenzt, ist eine Durchflussöffnung S ausgebildet. In alternativen Varianten kann die Öffnung S jedoch auch innerhalb einer dieser Elemente (Schaltstange 7 oder Kolben 2) ausgebildet sein. Diese sowie das verdickte untere Ende der Schaltstange 7 (samt Spule 4) teilen den Hohlraum H in zwei Kammern H1 und H2 (mit konstantem Gesamtvolumen) auf. Durch eine Bewegung der Schaltstange 7 relativ zum Kolben 2b entlang der Achse A lassen sich die Kammervolumina H1 und H2 (bei konstantem Gesamtvolumen) verändern, wobei die magnetorheologische Flüssigkeit zwischen diesen beiden Kammerteilen (durch den Spalt S) verschoben wird.

Im unteren Abschnitt des Kolbens 2b ist im Hohlraum H das Verschlusselement 3 der Steuereinheit angeordnet. Dieses besteht hier aus zwei flachen, halbkreisförmigen Hohlzylinderabschnitten, welche über eine Zug-Druckfeder 6 in einer Gleichgewichtslage gehalten werden, bei der die Durchströmungsöffnung D geöffnet ist. Werden die beiden Teile der Verschlusseinheit 3 (von der Achse A gesehen) entgegen der Federkraft der Feder 6 radial nach außen bewegt, so wird durch diese Bewegung die Durchströmungsöffnung D verschlossen.

Die Funktionsweise ist hierbei wie folgt: Bei diesem Prinzip wird die magnetorheologische Flüssigkeit im Fließmodus verwendet. Im Grundzustand (Gleichgewichtslage der Verschlusseinheit 3) ist das Ventil der Blockiereinheit, wie in Figur 4A gezeigt, geöffnet. Die Schaltstange 7 und die daran fest montierte Spule 4 bilden ein Steuerventil der Steuereinheit. Wird die Schaltstange 7 bei ausgeschaltetem Magnetfeld längs der Achse A bewegt, so kann sich diese Schaltstange relativ leichtgängig durch die MRF im Hohlraum H bewegen. Das Ventil der Blockiereinheit bzw. Blockiereinheit bleibt hierbei geöffnet (Fließen der MRF von der Kammer H1 in die Kammer H2 oder umgekehrt). Fließt nun ein ausreichend großer Strom durch die Spule 4, so wird hierdurch ein magnetisches Feld in der Durchflussöffnung S erzeugt und in dieser Durchflussöffnung S die MRF versteift (Hemmung des Durchflusses der MRF durch das Steuerventil). Hierdurch wird bei Bewegung der Schaltstange 7 nach unten in der unteren Kammer H2 der Steuereinheit ein Druck aufgebaut. Dieser Druck bewirkt, dass die beiden Teile der Verschlusseinheit 3 radial nach außen gedrückt werden, so dass die Durchströmungsöffnung D verschlossen wird. Durch die Verschlussteile 3 wird somit das Ventil der Blockiereinheit verschlossen. Es ist dann keine Bewegung der Kolbeneinheit 2 relativ zum Gehäuse 1 mehr möglich (Blockierung der Vorrichtung, siehe Figur 4B). Ohne Magnetfeld wird die Blockierung durch Abbau des Drucks bzw. durch entsprechende Ausgleichströmungen zwischen den Kammern H1 und H2 wieder gelöst (Fig. 1C)).

Im gezeigten Fall gehören zur Steuereinheit die Verschlussteile der Verschlusseinheit 3, die Schaltstange 7 samt der Spule 4 sowie die Rückstellefeder 6. Zur Blockiereinheit gehören die Kolbeneinheit 2 sowie das Gehäuse 1.

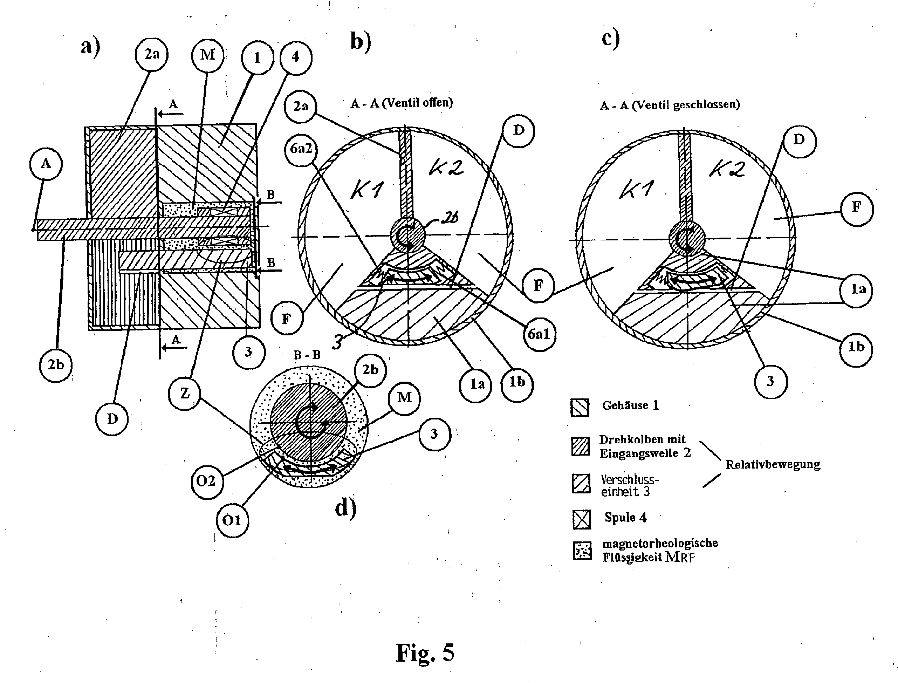

Figur 5 zeigt eine hydraulische Drehschwingungs-Blockiervorrichtung, also eine Vorrichtung zur Blockierung einer rotatorischen Bewegung. Diese Vorrichtung weist im Prinzip eine ähnliche Funktionsweise auf, wie beispielsweise die in der Figur 1 beschriebene Vorrichtung; identische bzw. sich entsprechende Vorrichtungselemente sind daher mit den identischen Bezugszeichen versehen.

Figur 4a zeigt hierbei einen Schnitt durch eine Ebene, in welcher die Zentralachse A (hier gleichzeitig Rotationsachse) der Drehkolbeneinheit 2 liegt. Figuren 4b und 4c zeigen einen Schnitt senkrecht zu dieser Ebene bzw. zur Rotationsachse A auf der Höhe A-A. Figur 4d zeigt einen entsprechenden Schnitt auf Höhe B-B.

Der Drehkolben 2 ist hier starr auf der Eingangswelle der Rotationsachse A befestigt und weist einen rotationssymmetrisch um die Achse A angeordneten Wellenabschnitt 2b sowie ein radialsymmetrisch davon abstehendes Flügelelement 2a auf. Je nach Stellung des Flügelelements (siehe Figuren 4b und 4c) ergeben sich unterschiedlich große Kammervolumina der beiden Kammern K1 und K2 im Gehäuse 1. Das zylinderförmige Gehäuse 1 weist hierbei ein Trennelement 1a auf (in Figuren 4b und 4c näherungsweise dreieckig dargestellt), welches die beiden Kammern K1 und K2 voneinander trennt. Dieses Element ist entlang eines Teils des Gehäuseaußenumfangs angeordnet und reicht von der Innenwandfläche des Gehäuseaußenumfangs 1b bis zur Achse A nach innen hin. Weiterhin reicht es entlang der Achse A gesehen abdichtend bis an den Eingangswellenabschnitt 2b heran. In dem Trennelement 1a ist die Durchströmungsöffnung D als Ventilspalt ausgebildet. Durch eine Bewegung des Flügelabschnitts 2a entlang des Außenumfangs des Gehäuses 1 und innerhalb des Gehäuseinnenraums wird somit das nicht-magnetorheologische und nicht-elektrorheologische Fluid F durch Drücken durch den Ventilspalt D zwischen den beiden Kammern K1 und K2 hin und her bewegt (Änderung der Kammervolumina). Innerhalb des Trennelementes 1a ist näherungsweise konzentrisch um die Rotationsachse A und beabstandet von dieser die Verschlusseinheit 3 gelagert. Die Form dieser Lagerung bzw. der Verschlusseinheit 3entspricht näherungsweise dem Teilabschnitt (Sektor) eines Hohlzylinders. Die Verschlusseinheit 3 ist hierbei über zwei Zug-Druck-Federn 6a1 und 6a2 mit der Lagerung im Trennelement 1a so verbunden, dass sie über einen kleinen Winkelabschnitt (Winkelsektor) um die Achse A rotierbar ist. Diese Rotation ermöglicht, dass in einer Stellung der Einheit 3 (Fig. 4c) die Öffnung D verschlossen wird (Blockierung der Vorrichtung) und in einer anderen Stellung (Fig. 4b) der Einheit 3 die Öffnung D durchlässig ist. Hierbei wird die Verschlusseinheit 3 durch die beiden Federn 6a1 und 6a2 in einer Gleichgewichtslage gehalten (in dieser ist das Ventil geöffner).

Das erste Steuerelement (bzw. die erste Oberfläche O1) ist hierbei als der der Achse A zugewandte Innenwandabschnitt der Verschlusseinheit 3 ausgebildet. Das zweite Steuerelement (bzw. die zweite Oberfläche 02) ist hierbei als der Achse A abgewandter Außenwandabschnitt des Eingangswellenelements 2b ausgebildet. Wie die Figur 4d zeigt, ist der Zwischenraum zwischen diesen beiden Steuerelementen mit der magnetorheologischen Flüssigkeit MRF bzw. M gefüllt. Im Bereich des Zwischenraums Z ist darüberhinaus der Elektromagneten 4 in Form eines rotationssymmetrisch um die Achse A angeordneten Torus, welcher fest mit dem Eingangswellenelement 2b verbunden ist, angeordnet.

Bei ausreichender Magnetfeldstärke im Zwischenraum Z kann somit eine kraftschlüssige, feste, mechanische Kopplung von Verschlusseinheit 3 und Eingangswellenabschnitt 2b der Drehkolbeneinheit 2 realisiert werden. Durch geeignete Einstellung der Stellung der Drehkolbeneinheit 2 relativ zum Gehäuse, der Rückstellkraft der Federn 6a1 und 6a2 sowie der Feldstärke im Zwischenraum Z kann somit die relative Lage der Verschlusseinheit 3 in Bezug auf den gratförmigen Abschnitt des Gehäuses 1 verändert bzw. eingestellt werden. Durch die Beeinflussung der Anordnung der Verschlusseinheit 3 relativ zum Abschnitt 1a des Gehäuses 1 bewirkt somit die Relativbewegung von Einheit 2 und Einheit 1 je nach gewählter Feldstärke die Öffnung oder den Verschluss der Durchströmungsöffnung D des Ventilspalts zwischen den beiden Kammern K1 und K2. Je nach Stellung der Verschlusseinheit 3 relativ zum Gehäuse 1 wird somit der Drehkolben 2 innerhalb des Gehäuses 1 blockiert (verriegelt) oder freigegeben (entriegelt).

Im gezeigten Beispiel ist somit der Drehkolben 2a, 2b starr auf der Eingangswelle befestigt. Parallel dazu ist auf dem Eingangswellenelement 2b die Spule 4 zur Felderzeugung montiert. Durch die Drehbewegung des Flügelabschnitts 2a in der Blockiereinheit wird bei ausgeschaltetem Feld die nicht-feldsteuerbare Flüssigkeit F durch den Ventilspalt D gedrückt. Die Verschlusseinheit 3 kann relativ zum Gehäuse 1 und zur Eingangswelle bzw. zum Drehkolben 2 bewegt werden. Das Verschlusselement wird durch die zwei Federn 6a1 und 6a2 in seiner Ausgangsposition (Gleichgewichtslage) gehalten. Durch eine Bewegung des Verschlussteilabschnitts 3 des Ventils in seiner Führung innerhalb des gratförmigen Gehäuseabschnitts 1a kann der Ventilspalt D verschlossen werden. Da sich die Spule 4 auf derselben Welle wie der Drehkolben befindet, wird diese bei einer Drehbewegung des Kolbens ebenfalls bewegt.

Die Relativbewegung von Verschlusselement 3 und Gehäuse 1 wird durch eine magnetfeldabhängige Scherung (Drehscherung) der MRF, welche sich im Zwischenraum Z zwischen den beiden Oberflächen O1 und O2 befindet, verursacht. Wirkt kein Magnetfeld im Zwischenraum Z, wird das Verschlusselement 3 durch die Federn 6 in seine Ausgangsposition bewegt bzw. dort gehalten, der Spalt D ist offen.

Zur Steuereinheit gehören im vorliegenden Fall der Wellenabschnitt 2b (samt Spule 4) sowie der diesem im Bereich B-B (in Figur 5a rechts neben der Schnittlinie A-A gezeigte) Abschnitt der Verschlusseinheit 3; zur Blockiereinheit gehören der Flügelabschnitt 2a, das Gehäuse 1 sowie die Federn 6a1 und 6a2.

## Patentansprüche

1. Blockiervorrichtung, bevorzugt zum Blockieren einer translatorischen Bewegung oder einer rotatorischen Bewegung, aufweisend
eine Steuereinheit mit
• einem ersten Steuerelement mit einer ersten Oberfläche (O1) und einem zweiten Steuerelement mit einer zweiten Oberfläche (O2), wobei die beiden Steuerelemente mit ihren beiden Oberflächen relativ zueinander bewegbar sind,
• einem zumindest teilweise mit einem magnetorheologischen und/oder elektrorheologischen Material (M) gefüllten, zwischen der ersten und der zweiten Oberfläche angeordneten Raumbereich (Zwischenraum Z), und
• einem Felderzeuger (4), mit welchem in zumindest einem Teilbereich des materialgefüllten Teils des Zwischenraums ein magnetisches und/oder elektrisches Feld erzeugbar ist,
eine Blockiereinheit mit einer Kolbeneinheit (2) und
ein Verriegelungssystem (3), mit welchem die Kolbeneinheit verriegelbar ist,
wobei die beiden Steuerelemente durch das im Zwischenraum erzeugte Feld aneinander koppelbar sind und wobei mittels dieser Kopplung der Verriegelungszustand von Verriegelungssystem und Kolbeneinheit veränderbar ist
**dadurch gekennzeichnet, dass**
die Steuereinheit eine relativ zu der Kolbeneinheit (2) und dem Verriegelungssystem (3) bewegbare Öffnungseinheit (5) aufweist, welche an das Verriegelungssystem (3) und/oder an die Kolbeneinheit (2) koppelbar ist, wobei bei Kopplung der beiden Steuerelemente aneinander durch die weitere Kopplung der Öffnungseinheit an das Verriegelungssystem und/oder an die Kolbeneinheit der Verriegelungszustand von Verriegelungssystem und Kolbeneinheit veränderbar ist.

2. Blockiervorrichtung nach dem vorhergehenden Anspruch,
***dadurch gekennzeichnet, dass***
die Blockiervorrichtung bei Kopplung der beiden Steuerelemente aneinander vom verriegelten Zustand in den entriegelten Zustand überführbar ist,
oder
dass die Blockiervorrichtung bei Kopplung der beiden Steuerelemente aneinander vom entriegelten Zustand in den verriegelten Zustand überführbar ist.

3. Blockiervorrichtung nach einem der vorhergehenden Ansprüche,
***dadurch gekennzeichnet, dass***
das Verriegelungssystem und/oder die Kolbeneinheit so angeordnet und/oder ausgebildet sind, dass bei Kopplung der beiden Steuerelemente aneinander das Verriegelungssystem relativ zur Kolbeneinheit bewegbar ist und durch diese Relativbewegung der Verriegelungszustand von Verriegelungssystem und Kolbeneinheit veränderbar ist und/oder
dass das Verriegelungssystem und/oder die Kolbeneinheit so angeordnet und/oder ausgebildet sind, dass bei Kopplung der beiden Steuerelemente aneinander zumindest ein Teil der Steuereinheit relativ zum Verriegelungssystem bewegbar ist und durch diese Relativbewegung der Verriegelungszustand von Verriegelungssystem und Kolbeneinheit veränderbar ist.

4. Blockiervorrichtung nach einem der vorhergehenden Ansprüche,
***dadurch gekennzeichnet, dass***
das Verriegelungssystem als Teil der Steuereinheit ausgebildet ist und dass das Verriegelungssystem mit einem der beiden Steuerelemente gekoppelt ist, wobei bevorzugt die Kopplung eine mechanische Kopplung ist und/oder über eine starre, mechanische Verbindung erfolgt und/oder wobei bevorzugt das eine der beiden Steuerelemente als Teil des Verriegelungssystems ausgebildet ist
und/oder
dass die beiden Steuerelemente so angeordnet und/oder ausgebildet sind, dass die Relativbewegung der beiden Oberflächen zueinander für das magnetorheologische und/oder elektrorheologische Material im Zwischenraum als Scherbewegung (seitliches gegeneinander Verschieben der beiden Oberflächen) und/oder als Quetschbewegung (aufeinander Zu- und voneinander Wegbewegen der beiden Oberflächen) ausgebildet ist.

5. Blockiervorrichtung nach einem der vorhergehenden Ansprüche,
***dadurch gekennzeichnet, dass***
die Steuereinheit ein Schaltelement (7), insbesondere eine Schaltstange, aufweist, mittels welcher bevorzugterweise die Kolbeinheit bewegbar ist
und/oder
dass ein erste abgeschrägte Endflächen (E2) aufweisendes Verriegelungssystem (3) und eine zweite abgeschrägte Endflächen (E1) aufweisende Öffnungseinheit (5) vorhanden sind, wobei die ersten und die zweiten Endflächen parallel zueinander verlaufen und seitlich versetzt ineinander eingreifen
und/oder
dass die relativ zueinander bewegbaren Oberflächen oder Steuerelemente als bei konstantem Abstand von Plattenebene zu Plattenebene seitlich gegeneinander verschiebbare oder als aufeinander zu- und voneinander wegbewegbare, vorteilhafterweise planparallele Platten oder als konzentrisch angeordnete, gegeneinander entlang einer gemeinsamen Achse verschiebbare Zylinderelemente ausgebildet sind
und/oder
dass die Kolbeneinheit (2) eine Durchströmungsöffnung (D) aufweist.

6. Blockiervorrichtung, bevorzugt zum Blockieren einer translatorischen Bewegung oder einer rotatorischen Bewegung, aufweisend
eine Blockiereinheit mit einer Kolbeneinheit (2) und
eine Steuereinheit mit einem relativ zur Kolbeneinheit beweglichen Schaltelement (7), insbesondere einer Schaltstange, und mit einem Verriegelungssystem (3), mit welchem die Kolbeneinheit verriegelbar ist,
eine zumindest teilweise von der Kolbeneinheit, von dem Schaltelement oder von der Kolbeneinheit und dem Schaltelement ausgebildete Durchflussöffnung (S), und
ein zumindest teilweise in der Durchflussöffnung (S) angeordnetes magnetorheologisches und/oder elektrorheologisches Material (M), und
einen Felderzeuger (4), mit welchem in zumindest einem Teilbereich der Durchflussöffnüng (S) ein magnetisches und/oder elektrisches Feld erzeugbar ist,
wobei bei ausgeschaltetem Feld durch die Relativbewegung von Kolbeneinheit und Schaltelement das magnetorheologische und/oder elektrorheologische Material zumindest teilweise durch die Durchflussöffnung (S) hindurchbewegbar ist und wobei bei eingeschaltetem Feld das Verriegelungssystem durch die Relativbewegung von Kolbeneinheit und Schaltelement mit einem Druck beaufschlagbar und hierdurch der Verriegelungszustand von Verriegelungssystem und Kolbeneinheit veränderbar ist,
***dadurch gekennzeichnet, dass***
die Kolbeneinheit (2) eine Durchströmungsöffnung (D) aufweist, wobei die Durchflussöffnung (S) und die Durchströmungsöffnung (D) so ausgebildet
und angeordnet sind, dass der Verriegelungszustand von Verriegelungssystem und Kolbeneinheit bei eingeschaltetem Feld veränderbar ist, indem die Hindurchbewegung des Materials durch die Durchflussöffnung (S) durch das Feld gehemmt oder unterbunden wird, indem hierdurch die Druckbeaufschlagung erzeugt wird und indem durch den erzeugten Druck die Durchströmungsöffnung (D) der Kolbeneinheit mittels des Verriegelungsystems geöffnet oder verschlossen wird.

7. Blockiervorrichtung nach dem vorhergehenden Anspruch,
***dadurch gekennzeichnet, dass***
das Schaltelement zumindest teilweise innerhalb der Kolbeneinheit angeordnet ist, wobei bevorzugt ein innerhalb der Kolbeneinheit ausgebildeter Hohlraum (H) vorhanden ist, welcher durch das Schaltelement und die Durchflussöffnung (S) in zwei durch die Durchflussöffnung (S) verbundene Kammern (H1, H2) unterteilt ist, zwischen denen das magnetorheologische und/oder elektrorheologische Material hin- und herbewegbar ist.

8. Blockiervorrichtung nach einem der vorhergehenden Ansprüche,
***dadurch gekennzeichnet, dass***
die Blockiereinheit ein nicht-feldsteuerbares Fluid (F), insbesondere eine nicht-magnetorheologische und eine nicht-elektrorheologische Flüssigkeit oder ein Gas, umfasst, wobei bevorzugt das nicht-feldsteuerbare Fluid zumindest teilweise aus derselben Flüssigkeit besteht, welche als Trägerflüssigkeit des magnetorheologischen und/oder elektrorheologischen Materials dient, und/oder wobei bevorzugt im Gehäuse zwei bevorzugt durch die Durchströmungsöffnung (D) verbundene Klammern (K1, K2) ausgebildet sind, zwischen denen das nicht-feldsteuerbare Fluid durch eine Relativbewegung von Kolbeneinheit und Gehäuse verschiebbar ist.

9. Blockiervorrichtung nach einem der vorhergehenden Ansprüche,
***dadurch gekennzeichnet, dass***
die Blockiervorrichtung ohne erzeugtes Feld im verriegelten Zustand ist oder dass die Blockiervorrichtung ohne erzeugtes Feld im entriegelten Zustand ist
und/oder **gekennzeichnet durch**
die Ausbildung als hydraulische Blockierung, wobei das Verriegelungssystem und die Kolbeneinheit relativ zueinander beweglich sind, wobei im verriegelten Zustand das Verriegelungssystem die Kolbeneinheit verschließt und wobei im entriegelten Zustand die Kolbeneinheit nicht **durch** das Verriegelungssystem verschlossen ist,
oder
**durch** die Ausbildung als mechanische Blockierung, wobei im verriegelten Zustand das Verriegelungssystem die Kolbeneinheit in ihrer Beweglichkeit blockiert und wobei im entriegelten Zustand die Kolbeneinheit in ihrer Beweglichkeit nicht **durch** das Verriegelungssystem blockiert ist, und wobei bei dieser mechanischen Blockierung bevorzugt im nicht verriegelten Zustand die Kolbeneinheit relativ zum Gehäuse und/oder relativ zum Verriegelungssystem beweglich ist und im verriegelten Zustand die Kolbeneinheit relativ zum Gehäuse und/oder relativ zum Verriegelungssystem nicht beweglich ist.

10. Blockiervorrichtung nach einem der vorhergehenden Ansprüche,
***dadurch gekennzeichnet, dass***
das Verriegelungssystem als Teil der Steuereinheit ausgebildet ist oder dass das Verriegelungssystem als Teil der Blockiereinheit ausgebildet ist
und/oder
dass das Verriegelungssystem zumindest teilweise innerhalb der Kolbeneinheit angeordnet ist und/oder zumindest teilweise von der Kolbeneinheit umschlossen wird
und/oder
dass die Kolbeinheit relativ zum Gehäuse beweglich ist
und/oder
dass die Blockiereinheit und/oder die Steuereinheit eine Federelement (6), insbesondere eine Zug- oder Druck- oder eine Zug-Druck-Feder, aufweist, wobei bevorzugt ein als Federverbindung zwischen Kolbeneinheit und Verriegelungssystem (Verschlussfeder) und/oder als Federverbindung zwischen unterschiedlichen Elementen der Steuereinheit (Rückstellfeder) ausgebildetes Federelement vorgesehen ist und/oder wobei bevorzugt das Verriegelungssystem aus mehreren relativ zueinander beweglichen Teilelementen aufgebaut ist und mindestens zwei dieser Teilelemente durch das Federelement, insbesondere in Form eines Abstandshalters, verbunden sind.

11. Blockiervorrichtung nach einem der vorhergehenden Ansprüche,
***gekennzeichnet durch***
einen Felderzeuger in Form mindestens eines Magneten, insbesondere eines Elektromagneten oder eines Permanentmagneten, und einen **durch** diesen in der Blockiervorrichtung ausgebildeten, den Zwischenraum (Z) oder die Durchflussöffnung (S) umfassenden Magnetkreis, wobei bevorzugt mindestens ein Elektromagnet und mindestens ein Permanentmagnet im Magnetkreis vorgesehen sind,
und/oder
**durch** einen Felderzeuger in Form mindestens eines Elektrodenpaares samt mindestens einer Spannungsquelle, wobei bevorzugt die relativ zueinander bewegbaren Oberflächen oder Teile der Steuerelemente als Elektroden ausgebildet sind
und/oder
**dadurch**, dass der Felderzeuger fest mit der Steuereinheit, dem Schaltelement und/oder der Kolbeneinheit verbunden ist, insbesondere mechanisch an der Steuereinheit, dem Schaltelement und/oder der Kolbeneinheit fixiert ist.

12. Vorrichtung zum Verschließen einer Tür, eines Fensters oder einer Klappe, enthaltend eine Blockiervorrichtung nach einem der vorhergehenden Blockiervorrichtungsansprüche oder Bedienungselement, insbesondere Schalthebel, Druckoder Drehknopf, enthaltend eine Blockiervorrichtung nach einem der vorhergehenden Blockiervorrichtungsansprüche.

13. Magnetorheologisches und/oder elektrorheologisches Blockierverfahren, bei dem eine Kolbeneinheit verriegelt und/oder entriegelt wird, indem ein magnetisches und/oder ein elektrisches Feld in einem zumindest teilweise mit einem magnetorheologischen und/oder elektrorheologischen Material gefüllten Zwischenraum (Z) oder in einer zumindest teilweise mit diesem Material gefüllten Durchflussöffnung (S) erzeugt wird,
***dadurch gekennzeichnet, dass***
eine Blockiervorrichtung nach einem der vorhergehenden Blockiervorrichtungsansprüche eingesetzt wird.

14. Verwendung einer Blockiervorrichtung nach einem der vorhergehenden Blockiervorrichtungsansprüche als Ventil, als mechanischer und/oder elektrischer Verschluss, als mechanischer und/oder elektrischer Blockiermechanismus, als elektrischer Kontakt und/oder zur temporären Fixierung einer Tür, eines Fensters, einer Klappe oder eines Bedienungselementes, insbesondere eines Schalthebels, eines Druck- oder Drehknopfes.

## Claims

1. Blocking device, preferably for blocking a translational movement or a rotational movement, having
a control unit having
- a first control element having a first surface (01) and a second control element having a second surface (02), wherein both control elements are able to move relative to each other with both of their surfaces,
- a spatial region (intermediate space Z) arranged between the first and the second surface, which is at least partially filled with a magnetorheological and/or electrorheological material (M), and
- a field generator (4) with which a magnetic and/or electrical field is able to be generated in at least one partial region of the part of the intermediate space that is filled with material,
a blocking unit having a piston unit (2), and
a locking system (3), with which the piston unit is able to be locked,
wherein both control elements are able to be coupled to each other by the field generated in the intermediate space and wherein the locking state of the locking system and piston unit is able to be changed by means of this coupling,
**characterised in that**,
the control unit has an opening unit (5) that is able to be moved relative to the piston unit (2) and the locking system (3), which is able to be coupled to the locking system (3) and/or the piston unit (2), wherein the locking state of the locking system and the piston unit is able to be changed during the coupling of both control elements to each other by the further coupling of the opening unit to the locking system and/or to the piston unit.

2. Blocking device according to the preceding claim,
**characterised in that**,
the blocking device is able to be transferred from the locked state to the unlocked state when coupling both control elements to each other,
or
the blocking device is able to be transferred from the unlocked state to the locked state when coupling both control elements to each other.

3. Blocking device according to one of the preceding claims,
**characterised in that**,
the locking system and/or the piston unit are arranged and/or designed in such a way that, when coupling both control elements to each other, the locking system is able to be moved relative to the piston unit and the locking state of the locking system and piston unit is able to be changed by this relative movement,
and/or
the locking system and/or the piston unit are arranged and/or designed in such a way that, when coupling both control elements to each other, at least one part of the control unit is able to be moved relative to the locking system and the locking state of the locking system and piston unit is able to be changed by this relative movement.

4. Blocking device according to one of the preceding claims,
**characterised in that**,
the locking system is formed as part of the control unit and the locking system is coupled with one of the two control elements, wherein the coupling is preferably a mechanical coupling and/or is carried out by a fixed, mechanical connection and/or wherein one of the two control elements is preferably formed as part of the locking system,
and/or
both control elements are arranged and/or designed in such a way that the relative movement of both surfaces relative to each other for the magnetorheological and/or electrorheological material in the intermediate space is formed as a shear movement (lateral shifting of both surfaces against each other) and/or as a flattening movement (movement of both surfaces towards each other and away from each other).

5. Blocking device according to one of the preceding claims,
**characterised in that**,
the control unit has a switching element (7), in particular a switch rod, by means of which the piston unit is able to be moved in a preferred manner,
and/or
a first locking system (3) having bevelled end faces (E2) and a second opening unit (5) having bevelled end faces (E1) are present, wherein the first and the second end faces run in parallel to each other and engage with each other with lateral displacement,
and/or
the surfaces or control elements that are able to be moved relative to each other are advantageously formed as plane-parallel plates that are able to be shifted against one another laterally with a constant distance from plate plane to plate plane or as plates that are able to be moved towards and away from one another, or as concentrically arranged cylinder elements that are able to be displaced along a mutual axis,
and/or
the piston unit (2) has a perfusion opening (D).

6. Blocking device, preferably for blocking a translational movement or a rotational movement, having
a blocking unit having a piston unit (2), and
a control unit having a switching element (7) moving relative to the piston unit, in particular a switch rod, and having a locking system (3) with which the piston unit is able to be locked,
a through-flow opening (S) formed at least partially from the piston unit, the switching element or from the piston unit and the switching element, and
a magnetorheological and/or electrorheological material (M) arranged at least partially in the through-flow opening (S), and
a field generator (4) with which a magnetic and/or electrical field is able to be generated in at least one partial region of the through-flow opening (S),
wherein, when the field is switched off, due to the relative movement of the piston unit and switching element, the magnetorheological and/or electrorheological material is able to move at least partially through the through-flow opening (S), and wherein, when the field is switched on, the locking system is able to be charged with pressure due to the relative movement of the piston unit and switching element and the locking state of the locking system and piston unit is hereby able to be changed,
**characterised in that**,
the piston unit (2) has a perfusion opening (D), wherein the through-flow opening (S) and the perfusion opening (D) are designed and arranged in such a way that, when the field is switched off, the locking state of the locking system and piston unit is able to be changed by the movement of the material through the through-flow opening (S) being inhibited or prevented by the field, by the pressure application hereby being generated and by the perfusion opening (D) of the piston unit being opened or closed by the generated pressure by means of the locking system.

7. Blocking device according to the preceding claim,
**characterised in that**,
the switching element is arranged at least partially within the piston unit, wherein a hollow space (H) preferably exists within the piston unit, said space being subdivided by the switching element and the through-flow opening (S) into two chambers (H1, H2) that are connected by the through-flow opening (S), between which the magnetorheological and/or electrorheological material is able to move back and forth.

8. Blocking device according to one of the preceding claims,
**characterised in that**,
the blocking unit comprises a non-field-controllable fluid (F), in particular a non-magnetorheological and a non-electrorheological liquid or a gas, wherein the non-field-controllable fluid preferably at least partially consists of the same liquid, which serves as a carrier liquid of the magnetorheological and/or electrorheological material, and/or wherein two chambers (K1, K2) that are preferably connected by the perfusion opening (D) are preferably formed in the housing, between which chambers the non-field-activatable fluid is able to be displaced by a relative movement of the piston unit and housing.

9. Blocking device according to one of the preceding claims,
**characterised in that**,
the blocking device without a generated field is in the locked state or the blocking device without a generated field is in the unlocked state,
and/or **characterised by**
formation as hydraulic blocking, wherein the locking system and the piston unit can be moved relative to each other, wherein, in the locked state, the locking system closes the piston unit and wherein, in the unlocked state, the piston unit is not closed by the locking system,
or
formation as mechanical blocking, wherein, in the locked state, the locking system blocks the piston unit in terms of its ability to move and wherein, in the unlocked state, the piston unit is not blocked by the locking system in terms of its ability to move, and wherein, with this mechanical blocking, the piston unit can be moved relative to the housing and/or relative to the locking system, preferably in the unlocked state, and, in the locked state, the piston unit cannot move relative to the housing and/or relative to the locking system.

10. Blocking device according to one of the preceding claims,
**characterised in that**,
the locking system is formed as part of the control unit or the locking system is formed as part of the blocking unit,
and/or
the locking system is at least partially arranged within the piston unit and/or is at least partially enclosed by the piston unit,
and/or
the piston unit can move relative to the housing,
and/or
the blocking unit and/or the control unit has a spring element (6), in particular a tension spring, a compression spring or a tension and compression spring, wherein a spring element that is formed as an elastic connection between the piston unit and locking system (action spring) and/or is formed as an elastic connection between different elements of the control unit (return spring) is preferably provided, and/or wherein the locking system is preferably constructed from several partial elements that can move relative to one another and at least two of these partial elements are connected by the spring element, in particular in the form of a spacer.

11. Blocking device according to one of the preceding claims,
**characterised by**
a field generator in the form of at least one magnet, in particular an electromagnet or a permanent magnet, and a magnetic circuit comprising the intermediate space (Z) or the through-flow opening (S) formed thereby in the blocking device, wherein at least one electromagnet and at least one permanent magnet are preferably provided in the magnetic circuit,
and/or
a field generator in the form of at least one electrode pair, together with at least one voltage source, wherein the surfaces or parts of the control elements that are able to be moved relative to one another are formed as electrodes,
and/or
the field generators being connected fixedly to the control unit, the switching element and/or the piston unit, in particular fixed mechanically to the control unit, the switching element and/or the piston unit.

12. Device for closing a door, a window or a hatch, containing a blocking device according to one of the preceding claims for a blocking device, or operating element, in particular a gear lever, pushbutton or rotary button, containing a blocking device according to one of the preceding claims for a blocking device.

13. Magnetorheological and/or electrorheological blocking method, in which a piston unit is locked and/or unlocked by a magnetic and/or an electrical field being generated in an intermediate space (Z) that is at least partially filled with a magnetorheological and/or electrorheological material, or in a through-flow opening (S) that is at least partially filled with this material,
**characterised in that**,
a blocking device according to one of the preceding claims for a blocking device is used.

14. Use of a blocking device according to one of the preceding claims for a blocking device as a valve, as a mechanical and/or electrical seal, as a mechanical and/or electrical blocking mechanism, as an electrical contact and/or for the temporary fixing of a door, a window, a hatch or an operating element, in particular a gear lever, a pushbutton or a rotary button.

## Revendications

1. Dispositif de blocage, de préférence pour le blocage d'un mouvement de translation ou d'un mouvement de rotation, comprenant :
une unité de commande avec :
- un premier élément de commande avec une première surface (01) et un deuxième élément de commande avec une deuxième surface (02), les deux éléments de commande étant mobile l'un par rapport à l'autre avec leurs deux surfaces,
- un espace (espace intermédiaire Z) rempli au moins partiellement d'un matériau magnétorhéologique et/ou électrorhéologique (M), disposé entre la première et la deuxième surface et
- un générateur de champ (4), avec lequel, dans au moins une partie de la partie remplie de matériau de l'espace intermédiaire, un champ magnétique et/ou électrique peut être généré,
une unité de blocage avec une unité de piston (2) et
un système de verrouillage (3) avec lequel l'unité de piston peut être verrouillée,
les deux éléments de commande pouvant être couplés l'un à l'autre par le champ généré dans l'espace intermédiaire et ce couplage permettant de modifier l'état de verrouillage du système de verrouillage et de l'unité de piston
**caractérisé en ce que**
l'unité de commande comprend une unité d'ouverture (5) mobile par rapport à l'unité de piston (2) et au système de verrouillage, qui peut être couplée au système de verrouillage (3) et/ou à l'unité de piston (2), l'état de verrouillage du système de verrouillage et de l'unité de piston pouvant être modifié lors d'un couplage des deux éléments de commande entre eux par le couplage supplémentaire de l'unité d'ouverture au système de verrouillage et/ou à l'unité de piston.

2. Dispositif de blocage selon la revendication précédente
**caractérisé en ce que**
le dispositif de blocage peut être passé de l'état verrouillé à l'état verrouillé lors d'un couplage des deux éléments de commande entre eux
ou
**en ce que** le dispositif de blocage peut être passé de l'état déverrouillé à l'état verrouillé lors d'un couplage des deux éléments de commande entre eux.

3. Dispositif de blocage selon l'une des revendications précédentes
**caractérisé en ce que**
le système de verrouillage et/ou l'unité de piston sont disposés et/ou conçus de façon à ce que, lors d'un couplage des deux éléments de commande entre eux, le système de verrouillage soit mobile par rapport à l'unité de piston et, grâce à ce mouvement relatif, l'état de verrouillage du système de verrouillage et de l'unité de piston peut être modifié
et/ou
**en ce que** le système de verrouillage et/ou l'unité de piston sont disposés et/ou conçus de façon à ce que, lors d'un couplage des deux éléments de commande entre eux, au moins une partie de l'unité de commande soit mobile par rapport au système de verrouillage et, grâce à ce mouvement relatif, l'état de verrouillage du système de verrouillage et de l'unité de piston peut être modifié.

4. Dispositif de blocage selon l'une des revendications précédentes
**caractérisé en ce que**
le système de verrouillage est conçu comme une partie de l'unité de commande et **en ce que** le système de verrouillage est couplé avec un des deux éléments de commande, le couplage étant de préférence un couplage mécanique et/ou ayant lieu par l'intermédiaire d'une liaison mécanique rigide et/ou de préférence l'un des deux éléments de commande étant conçu comme une partie du système de verrouillage
et/ou
**en ce que** les deux éléments de commande sont disposés et/ou conçus de façon à ce que le mouvement relatif des deux surfaces entre elles est conçu, pour le matériau magnétorhéologique et/ou électrorhéologique dans l'espace intermédiaire, comme un mouvement de cisaillement (décalage latéral des deux surfaces entre elles) et/ou comme un mouvement d'écrasement (rapprochement ou éloignement des deux surfaces).

5. Dispositif de blocage selon l'une des revendications précédentes
**caractérisé en ce que**
l'unité de commande comprend un élément de commutation (7), plus particulièrement une tige de commutation, à l'aide duquel de préférence l'unité de piston peut être mise en mouvement
et/ou
**en ce qu'**un système de verrouillage (3) comprenant des premières surfaces d'extrémité chanfreinées (E2) et une unité d'ouverture (5) comprenant des deuxièmes surfaces d'extrémité chanfreinées (E1) sont présents, les premières et deuxièmes surfaces d'extrémité étant parallèles entre elles et s'emboîtant avec un décalage latéral
et/ou
**en ce que** les surfaces mobiles ou éléments de commande entre eux sont conçues comme des plaques pouvant être déplacées latéralement l'une par rapport à l'autre avec une distance constante entre les plans des plaques ou comme des plaques pouvant être rapprochées ou éloignées l'une de l'autre, de préférence avec des faces parallèles ou comme des éléments cylindriques concentriques pouvant être déplacés l'un par rapport à l'autre le long d'un axe commun
et/ou
**en ce que** l'unité de piston (2) comprend une ouverture d'écoulement (D).

6. Dispositif de blocage, de préférence pour le blocage d'un mouvement de translation ou d'un mouvement de rotation, comprenant :
une unité de blocage avec une unité de piston (2) et
une unité de commande avec un élément de commutation (7) mobile par rapport à l'unité de piston, plus particulièrement une tige de commutation, et avec un système de verrouillage (3), avec lequel l'unité de piston peut être verrouillée,
une ouverture de passage (S) formée au moins partiellement par l'unité de piston, par l'élément de commutation ou par l'unité de piston et l'élément de commutation et un matériau magnétorhéologique et/ou électrorhéologique (M) disposé au moins partiellement dans l'ouverture de passage (S) et
un générateur de champ (4), avec lequel, dans au moins une zone partielle de l'ouverture de passage (S), un champ magnétique et/ou électrique peut être généré,
le matériau magnétorhéologique et/ou électrorhéologique (M) pouvant être mis en mouvement au moins partiellement à travers l'ouverture de passage (S), lorsque le champ est désactivé, grâce au mouvement relatif de l'unité de piston et de l'élément de commutation et lorsque le champ est activé, le système de verrouillage pouvant être alimenté en pression grâce au mouvement relatif de l'unité de piston et de l'élément de commutation et l'état de verrouillage du système de verrouillage et de l'unité de piston pouvant ainsi être modifié,
**caractérisé en ce que**
l'unité de piston (2) comprend une ouverture d'écoulement (D), l'ouverture de passage (S) et l'ouverture d'écoulement (D) étant conçues et disposées de façon à ce que l'état de verrouillage du système de verrouillage et de l'unité de piston puisse être modifié lorsque le champ est activé, du fait que le mouvement du matériau à travers l'ouverture de passage (S) est bloqué ou inhibé par le champ, une pression étant ainsi générée et la pression générée permettant d'ouvrir ou de fermer l'ouverture d'écoulement (D) de l'unité de piston à l'aide du système de verrouillage.

7. Dispositif de blocage selon la revendication précédente
**caractérisé en ce que**
l'élément de commutation est disposé au moins partiellement à l'intérieur de l'unité de piston, une cavité (H) existant de préférence à l'intérieur de l'unité de piston, qui est divisé, par l'élément de commutation et l'ouverture de passage (S), en deux chambres (H1, H2), reliées par l'ouverture de passage (S), entre lesquelles le matériau magnétorhéologique et/ou électrorhéologique peut être déplacé.

8. Dispositif de blocage selon l'une des revendications précédentes
**caractérisé en ce que**
l'unité de blocage comprend un fluide (F) non contrôlable par un champ, plus particulièrement un liquide ou un gaz non magnétorhéologique et/ou non électrorhéologique, ce fluide non contrôlable par un champ étant constitué de préférence du même liquide que celui qui sert de liquide de support du matériau magnétorhéologique et/ou électrorhéologique et/ou, de préférence, dans le boîtier, sont réalisées deux chambres (K1, K2), reliées de préférence par l'ouverture d'écoulement (D), entre lesquelles le fluide non contrôlable par un champ peut être déplacée par un mouvement relatif de l'unité de piston et du boîtier.

9. Dispositif de blocage selon l'une des revendications précédentes
**caractérisé en ce que**
le dispositif de blocage est dans l'état verrouillé lorsqu'il n'y a pas de champ ou **en ce que** le dispositif de blocage est dans l'état déverrouillé lorsqu'il n'y a pas de champ
et/ou **caractérisé par**
une conception en tant que blocage hydraulique, le système de verrouillage et l'unité de piston étant mobiles l'un par rapport à l'autre, le système de verrouillage fermant l'unité de piston dans l'état verrouillé et l'unité de piston n'étant pas fermée par le système de verrouillage dans l'état déverrouillé,
ou
par une conception en tant que blocage mécanique, le système de verrouillage bloquant la mobilité de l'unité de piston dans l'état verrouillé et la mobilité de l'unité de piston n'étant pas bloquée par le système de verrouillage dans l'état déverrouillé et, lors de ce blocage mécanique, de préférence dans l'état non verrouillé, l'unité de piston étant mobile par rapport au boîtier et/ou par rapport au système de verrouillage et, dans l'état verrouillé, l'unité de piston n'étant pas mobile par rapport au boîtier et/ou par rapport au système de verrouillage.

10. Dispositif de blocage selon l'une des revendications précédentes
**caractérisé en ce que**
le système de verrouillage est conçu comme une partie de l'unité de commande ou en ce que le système de verrouillage est conçu comme une partie de l'unité de blocage
et/ou
**en ce que** le système de verrouillage est disposé au moins partiellement à l'intérieur de l'unité de pistonet/ou est entouré au moins partiellement par l'unité de piston et/ou
**en ce que** l'unité de piston est mobile par rapport au boîtier
et/ou
**en ce que** l'unité de blocage et/ou l'unité de commande comprend un élément de ressort (6), plus particulièrement un ressort de traction, de compression ou un ressort de traction-compression, un élément de ressort conçu de préférence comme une liaison à ressort entre l'unité de piston et le système de verrouillage (ressort de fermeture) et/ou comme une liaison à ressort entre différents éléments de l'unité de commande (ressort de rappel) et/ou de préférence le système de verrouillage étant constitués d'éléments mobiles les uns par rapport aux autres et au moins deux de ces éléments étant reliés par l'élément de ressort, plus particulièrement sous la forme d'une entretoise.

11. Dispositif de blocage selon l'une des revendications précédentes
**caractérisé par**
un générateur de champ sous la forme d'au moins un aimant, plus particulièrement d'un électro-aimant ou d'un aimant permanent, et un circuit magnétique constitué de celui-ci dans le dispositif de blocage, comprenant l'espace intermédiaire (Z) ou l'ouverture de passage (S), de préférence au moins un électro-aimant et au moins un aimant permanent étant prévus dans le circuit magnétique,
et/ou
par un générateur de champ sous la forme d'au moins une paire d'électrodes avec au moins une source de tension, les surfaces ou les parties des éléments de commande mobiles entre elles étant de préférence conçues comme des électrodes
et/ou
en ce que le générateur de champ est relié de manière fixe avec l'unité de commande, l'élément de commutation et/ou l'unité de piston, plus particulièrement fixé mécaniquement à l'unité de commande, à l'élément de commutation et/ou à l'unité de piston.

12. Dispositif de fermeture d'une porte, d'une fenêtre ou d'un clapet, comprenant un dispositif de blocage selon l'une des revendications précédentes concernant un dispositif de blocage ou un élément de commande, plus particulièrement un levier de commande, un bouton poussoir ou rotatif, comprenant un dispositif de blocage selon l'une des revendications précédentes concernant un dispositif de blocage.

13. Procédé de blocage magnétorhéologique et/ou électrorhéologique, dans lequel une unité de piston est verrouillée et/ou déverrouillée, grâce au fait qu'un champ magnétique et/ou électrique est généré dans un espace intermédiaire (Z) rempli au moins partiellement d'un matériau magnétorhéologique et/ou électrorhéologique ou dans une ouverture de passage (S) remplie au moins partiellement de ce matériau,
**caractérisé en ce que**
un dispositif de blocage selon l'une des revendications précédentes concernant un dispositif de blocage est utilisé.

14. Utilisation d'un dispositif de blocage selon une des revendications précédentes concernant un dispositif de blocage comme une soupape, comme une fermeture mécanique et/ou électrique, comme mécanisme de blocage mécanique et/ou électrique, comme contact électrique et/ou comme fixation temporaire d'une porte, d'une fenêtre, d'un clapet ou d'un élément de commande, plus particulièrement d'un levier de commande, d'un bouton poussoir ou d'un bouton rotatif.
